# EUROPÄISCHE PATENTSCHRIFT

(11) **EP 0 650 858 B1**
(45) Veröffentlichungstag und Bekanntmachung des Hinweises auf die Patenterteilung: **08.07.1998**
(21) Anmeldenummer: 94116708.2
(22) Anmeldetag: 22.10.1994
(51) Int. Cl.: B60G 3/20, B62D 7/14

(54) **Radaufhängung**
Wheel suspension
Suspension de roue

(30) Priorität: 27.10.1993 DE 4336654
(43) Veröffentlichungstag der Anmeldung: 03.05.1995
(73) Patentinhaber: ZF FRIEDRICHSHAFEN Aktiengesellschaft, 88038 Friedrichshafen (DE)
(72) Erfinder: Gazyakan, Ünal, D-88045 Friedrichshafen (DE); Lanz, Hermann, D-88699 Frickingen (DE)

(56) Entgegenhaltungen:
- DE-A- 4 029 288
- US-A- 3 747 950

## Beschreibung

Die Erfindung betrifft eine Radaufhängung für ein Fahrzeugrad gemäß dem Oberbegriff des Anspruches 1.

Eine Radaufhängung dieser Art ist beispielsweise in der WO 92/12868 beschrieben.

Bekannt sind Radaufhängungen für Zwillings- oder Breitreifen, die als Starrachsen ausgeführt sind. Diese Starrachsen haben den Vorteil, daß sie sehr stabil und die Radlastschwankungen gering sind. Außerdem findet beim gleichzeitigen Ein- und Ausfedern keine Spur- oder Sturzänderung statt.

Von großem Nachteil ist allerdings, daß die Mindesthöhe der Ladefläche bei Lastkraftwagen und die Mindesthöhe für Mittelgänge bei Omnibussen durch die Oberkante der Achsbrücke begrenzt ist, so daß der sich zwischen den Rädern befindliche Raum nicht genutzt werden kann. Um möglichst wirtschaftlich Personen oder Waren transportieren zu können, muß jedoch möglichst viel des gesamten im Fahrzeug vorhandenen Raumes als Transportraum ausgeführt sein.

Auch die Bodenfreiheit wird durch die Achsbrücke eingeschränkt. Dies wirkt sich insbesondere bei Kraftfahrzeugen aus, die eine geringe Flurhöhe und/oder Schwerpunktlage aufweisen sollen.

Ein weiterer Nachteil von Starrachsen sind die ungünstigen Auswirkungen von Fahrbahnunebenheiten auf das Radlastverhältnis. Auch Spurrillen wirken sich sehr ungünstig auf das Radlastverhältnis aus, da im Extremfall nur noch ein Reifen der Zwillingsbereifung trägt.

Aus diesen Gründen werden auch für Nutzkraftfahrzeuge Einzelradaufhängungen verwendet.

Eine Einzelradaufhängung für ein Zwillingsreifenpaket ist in der US 2 441 807 beschrieben. Hierbei sind die beiden Räder des Zwillingsreifenpaketes an zwei Schwingen angebracht, die parallel zur Fahrzeuglängsachse verlaufen und innen und außen am Zwillingsreifenpaket angeordnet sind. Beim Überfahren von Bodenunebenheiten kann jedes einzelne Rad des Zwillingsreifenpaketes Vertikalbewegungen ausführen, das gesamte Zwillingsreifenpaket, also beide Räder zusammen, kann sich jedoch nicht gemeinsam bewegen.

Diese Radaufhängung hat zwar den Vorteil, daß die Radlasten ausgeglichen sind, jedoch ist der Sturz des Einzelrades nicht ausgeglichen, was sich insbesondere bei Nutzkraftfahrzeugreifen, die sehr sturzempfindlich sind, nachteilig auswirkt.

Bei der beschriebenen Radaufhängung ist auch kein Antrieb möglich bzw. nur mit einem sehr hohen technischen Aufwand zu realisieren, der nicht mehr wirtschaftlich wäre.

Nachteilig ist außerdem die fehlende Möglichkeit, die Achse lenkbar zu machen, und die Schwingen, die links und rechts des Zwillingsreifenpaketes angeordnet sind, benötigen sehr viel Bauraum.

Die DE 40 29 288 zeit eine andere Möglichkeit einer Radaufhängung, die aus einem räumlichen Lenkergetriebe gebildet ist und Schwenkbewegungen um mehrere Achsen zuläßt (Fig. 21). Sowohl das vordere als auch das hintere Lenkerpaar sind jeweils in einem Winkel zur Vertikalebene und nicht parallel zueinander angeordnet. Aufgrund dieser Lenkeranordnung weist die Radaufhängung nach der DE 40 29 288 ein ungünstiges Nickverhalten auf. Auch ist die Achse bei einer derartigen Lenkeranordnung nicht lenkbar, und der Einfederungsvorgang ist unklar. Nach Fig. 21 ist lediglich ein Sturzvorgang möglich.

In der eingangs aufgeführten WO 92/12868 ist eine Radaufhängung für ein Fahrzeugrad von einem Radträger getragen, der gegenüber einem Fahrzeugrahmen durch Führungs- und Federmittel höhenbeweglich geführt ist. Die Radaufhängung weist einen Freiheitsgrad auf, der dem Radträger eine Schwenkbewegung in einer Fahrzeugquerebene um eine in Fahrzeuglängsrichtung verlaufende Querachse erlaubt, wobei diese Drehachse etwa in der Mitte des Fahrzeugrades - bezogen auf seine Breite - und etwa in Höhe der Fahrbahnebene verläuft. Nachteilig an dieser Radaufhängung sind der große benötigte Bauraum vor, hinter und über dem Rad, die aufwendige Fertigung dieser Radaufhängung sowie vor allem die verbesserungsbedürftigen, elastokinematischen Eigenschaften, die mit der durch die Lenkergeometrie bedingten, auf der Höhe der Fahrbahnebene verlaufenden Drehachse der Schwenkbewegung verbunden sind.

Der vorliegenden Erfindung liegt daher die Aufgabe zugrunde, eine Radaufhängung vorzusehen, die platzsparend und elastokinematisch vorteilhaft ist.

Erfindungsgemäß wird diese Aufgabe durch eine Radaufhängung nach dem kennzeichnenden Teil des Anspruches 1 in Verbindung mit den gattungsmäßigen Merkmalen des Oberbegriffs gelöst.

Die erfindungsgemäße Radaufhängung mit den räumlich gekoppelten Lenkern hat den Vorteil, daß sie einfach hergestellt und montiert werden kann und die geometrische Form der Lenker an den zur Verfügung stehenden Bauraum angepaßt werden kann, so daß die erfindungsgemäße Radaufhängung gut in einen vorhandenen Raum eingebaut werden kann.

Vorteilhafte Weiterbildungen und Ausgestaltungen der Erfindung ergeben sich aus den Unteransprüchen 2 bis 13 und den nachfolgend anhand der Zeichnung beschriebenen Ausführungsbeispielen.
Es zeigt:
- Fig. 1: eine Seitenansicht einer erfindungsgemäßen Radaufhängung ohne das Fahrzeugrad;
- Fig. 2: eine Vorderansicht der Radaufhängung von Fig. 1;
- Fig. 3: eine Draufsicht auf die Radaufhängung von Fig. 1;
- Fig. 4: eine perspektivische Ansicht der in den Fig. 1 bis 3 dargestellten Radaufhängung;
- Fig. 5: eine perspektivische Ansicht des ersten Ausführungsbeispieles der Radaufhängung;
- Fig. 6: eine perspektivische Ansicht eines zweiten Ausführungsbeispiels einer erfindungsgemäßen Radaufhängung und
- Fig. 7: eine Vorderansicht einer Studie einer Sturzänderung an einer erfindungsgemäßen Radaufhängung.

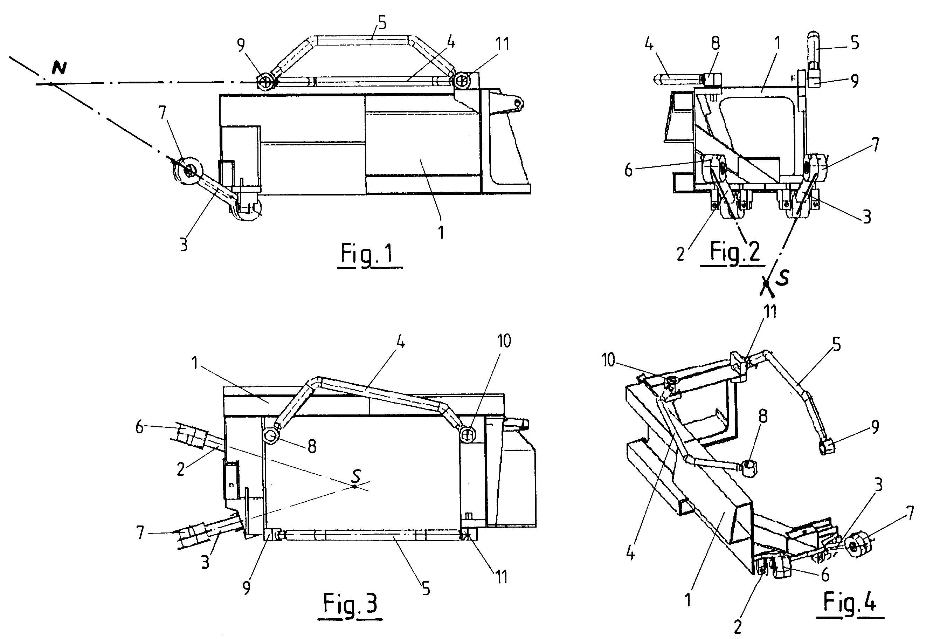

Bezug nehmend auf die Fig. 1 bis 4 sind die wichtigsten Grundelemente in Ansichten von drei Seiten (Fig. 1 bis 3) und, zum besseren Verständnis, in Fig. 4 auch perspektivisch dargestellt.

Die dargestellte Radaufhängung weist einen Radträger 1 auf, der, um Gewicht einzusparen, überwiegend aus Hohlprofilen besteht. Mit dem nicht dargestellten Fahrzeugrahmen ist der Radträger 1 über die Lenker 2, 3 und 4, 5, genauer gesagt über die an den Enden der Lenker angebrachten Anlenkpunkte 6, 7 und 8, 9, verbunden. Die Gelenke an den Anlenkpunkten 8, 9 sind als sogenannte Molekulargelenke ausgeführt.

Die unteren Lenker 2 und 3 schneiden sich im Punkt S (Fig. 3). In Konstruktionslage liegt dieser Punkt ca. 100 mm unter der Fahrbahnoberfläche in der Mitte eines hier nicht dargestellten Zwillingsreifens. Auf horizontaler Ebene liegt er ca. 50 mm vor den Reifenaufstandspunkten.

Aufgrund dieser Anordnung kann das Vorspurverhalten der Achse folgendermaßen beschrieben werden: Bei dem reinen Einfederungsvorgang tritt keine Vorspuränderung auf, bei der reinen Sturzbewegung beträgt die maximale Spurwinkeländerung ca. 0,01°, und bei einer Einfederung von 100 mm und einem Sturz von 10° beträgt die Vorspur ca. 0,6°, die elastokinematischen Eigenschaften sind also annähernd mit einer Starrachse vergleichbar.

Weiterhin ist an der Radaufhängung vorteilhaft, daß sie auch lenkbar ausgeführt werden kann.

Durch die gekröpfte Form der oberen Lenker 4, 5 kann die Radaufhängung sehr gut vorhandenen räumlichen Gegebenheiten angepaßt werden, wobei die oberen Lenker 4, 5 auch andersartig gekröpft sein können.

Um die erwähnten guten elastokinematischen Eigenschaften zu erreichen, muß für die beiden Lenkerpaare 2, 3 und 4, 5 grundsätzlich folgendes gelten: Es darf sich nur ein Lenkerpaar im endlichen Raum schneiden (Schnittpunkt S in Fig. 3), wobei dieser Schnittpunkt nahe an die Radaufstandsebene gelegt ist; dadurch wird das untere Lenkerpaar 2, 3 stärker belastet. Je spitzer der Winkel zwischen den unteren Lenkern 2, 3 ist, desto geringer wird die Vorspuränderung, allerdings nehmen auch die angreifenden Kräfte aufgrund von Querkräften auf das Rad zu.

Das zweite obere Lenkerpaar 4, 5 ist parallel und in Konstruktionslage waagerecht geführt, d. h. zwei gedachte Linien zwischen den Aplenkpunkten 8 und 10 bzw. 9 und 11 verlaufen parallel zueinander und waagerecht, die Kröpfungen der Lenker haben keinen Einfluß auf die elastokinematischen Eigenschaften der Radaufhängung. Die Sturzdrehachse liegt somit parallel zu dem oberen Lenkerpaar 4, 5 durch den Schnittpunkt von gedachten Verlängerungen des unteren Lenkerpaares 2, 3.

Um die Vorspuränderung möglichst gering zu halten, muß das obere Lenkerpaar 4, 5 allgemein möglichst lang ausgeführt sein, im dargestellten Ausführungsbeispiel ist es etwa dreimal so lang wie die unteren Lenker 2, 3. Die Belastung der Lenker 4, 5 beträgt einen Bruchteil derer der unteren Lenker 2, 3. Der Nickpol N ergibt sich in der Seitenansicht (Fig. 1) aus dem Schnittpunkt der gedachten Verlängerungen von Lenker 3 bzw. 2 und Lenker 4 bzw. 5.

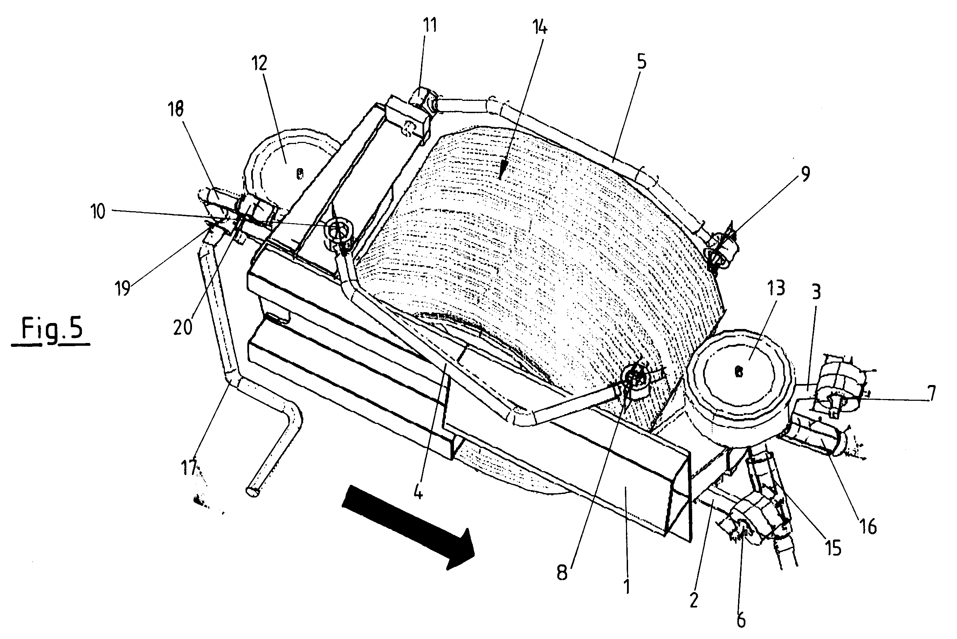

Ein erstes Ausführungsbeispiel einer erfindungsgemäßen Radaufhängung ist in Fig. 5 dargestellt.

Für bereits beschriebene Bauteile werden nachfolgend dieselben Bezugszeichen verwendet, und die Fahrtrichtung ist durch einen Pfeil in der Figur gekennzeichnet.

Zwei Luftfedern 12, 13 sind vor und hinter einem Fahrzeugrad, das als Zwillingsreifenpaket 14 ausgeführt ist, in der Mittelebene des Zwillingsreifenpaketes 14 angeordnet. Durch die Luftfedern 12, 13 wird das Radlastverhältnis aufgrund der Vertikalkraft im Zwillingsreifenpaket 14 bestimmt, daher ist die Lage der Luftfedern 12, 13 von Bedeutung.

Da die Luftfedern 12, 13 beim Sturzvorgang seitlich ausgelenkt und verschränkt werden, sind sie jeweils in eine obere und untere Luftfederplatte (beide nicht dargestellt) unterteilt. Um die seitliche Auslenkung der Luftfedern 12, 13 zu minimieren, werden sie möglichst tief auf dem Radträger 1 angelenkt.

Vor dem Zwillingsreifenpaket 14 sind Dämpfer 15, 16 zwischen den unteren Lenkern 2, 3 angeordnet. Durch die Neigung der Dämpfer 15, 16 in Quer- und in Längsrichtung können das Maß der Sturz- und der Einfederungsdämpfung bestimmt werden.

Mit dem Radträger 1 ist ein Stabilisator 17 über einen Zwischenlenker 18 verbunden. Die Mittellinie des Zwischenlenkers 18 durch zwei Anlenkpunkte 19 und 20 des Zwischenlenkers 18 schneidet die Momentandrehachse des Zwillingsreifenpaketes in Konstruktionslage. Die Momentandrehachse ist die Achse, um die sich das Zwillingsreifenpaket beim Überfahren von Bodenunebenheiten drehen kann.

Der Zwischenlenker 18 wird so lang ausgeführt, wie die konstruktiven Möglichkeiten, beispielsweise der zur Verfügung stehende Raum, dies zulassen, um, wie alle anderen beschriebenen Maßnahmen, den Einfluß des Stabilisators 17 auf den Sturzvorgang möglichst gering zu halten.

Die Anlenkpunkte 8, 9 des oberen Lenkerpaares 4, 5 und die Anlenkpunkte 6, 7 des unteren Lenkerpaares 2, 3 sind am nicht dargestellten Rahmen des Fahrzeuges angebracht und stellen somit Fixpunkte dar. An den Anlenkpunkten 8, 9 wird die Verbindung zum Fahrzeugrahmen über sogenannte Molekulargelenke hergestellt. Beim Überfahren von Fahrbahnunebenheiten kann sich daher das Zwillingsreifenpaket 14 um die beschriebene Momentanachse drehen.

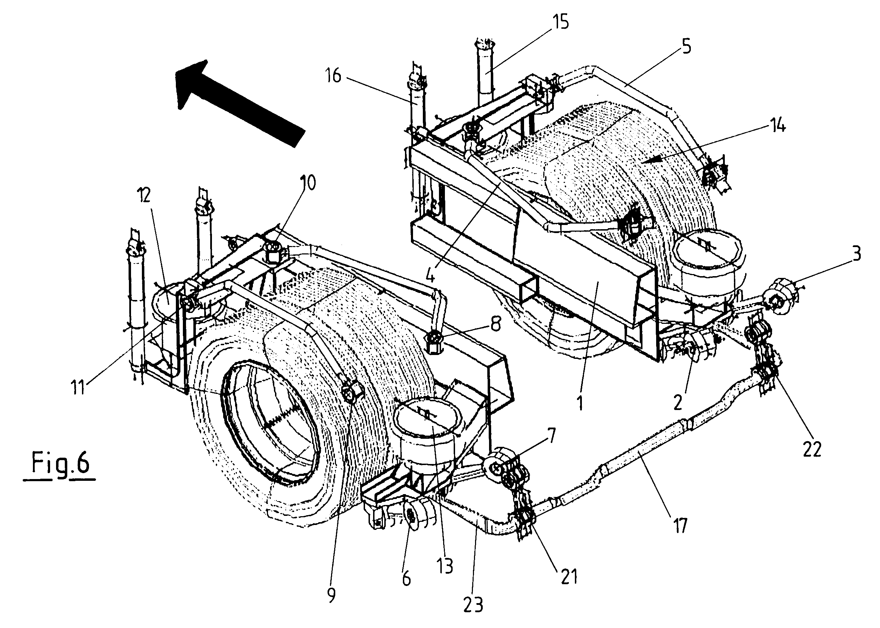

Ein alternatives Ausführungsbeispiel einer Radaufhängung ist in Fig. 6 dargestellt.

Auch hier sollen wieder dieselben Bezugszeichen für bereits beschriebene Bauteile aus den vorhergehenden Figuren benutzt werden und der Pfeil die Fahrtrichtung darstellen.

Bei diesem Ausführungsbeispiel ist der Stabilisator 17 ohne einen Zwischenlenker direkt am Radträger 1 befestigt. Mit dem Fahrzeugaufbau (nicht dargestellt) ist der Stabilisator 17 über zwei Lenker 21, 22 verbunden.

Konstruktiv ist der Stabilisator 17 so ausgeführt, daß er an einer Stelle 23 in Querrichtung, d. h. quer zur Fahrtrichtung, ein möglichst geringes Flächenträgheitsmoment aufweist, also weich ist, und in Längsrichtung, d. h. längs zur Fahrtrichtung, ein möglichst hohes Flächenträgheitsmoment aufweist, also steif ist. Aus Symmetriegründen ist diese Stelle 23 auch auf der anderen Seite des Stabilisators 17 vorgesehen, also symmetrisch zur Längsachse des Fahrzeuges.

Durch diese vorteilhafte Ausgestaltung wird folgendes bewirkt: bei translatorischer Bewegung der Anlenkpunkte 19 der Zwischenlenker beider zu einer Achse gehörigen Radaufhängungen bezüglich des Fahrzeugrahmens in gleiche Raumrichtung übt der Stabilisator 17 kein Moment auf den Radträger 1 aus. Der Stabilisator 17 wird dabei nur in Querrichtung verschoben und bei ungleicher Einfederung verdreht. Bei translatorischer Bewegung der Anlenkpunkte 19 der Zwischenlenker beider zu einer Achse gehörigen Radaufhängungen bezüglich des Fahrzeugrahmens in entgegengesetzten Raumrichtungen wird der Stabilisator 17 verbogen und übt ein Rückstellmoment auf den Radträger 1 aus, das insbesondere vom Flächenträgheitsmoment an der Stelle 23 des Stabilisators 17 abhängig ist.

Würde der Stabilisator 17 eine unendlich große Biegesteifigkeit aufweisen, so wäre die dargestellte Achse eine Verbundlenkerachse.

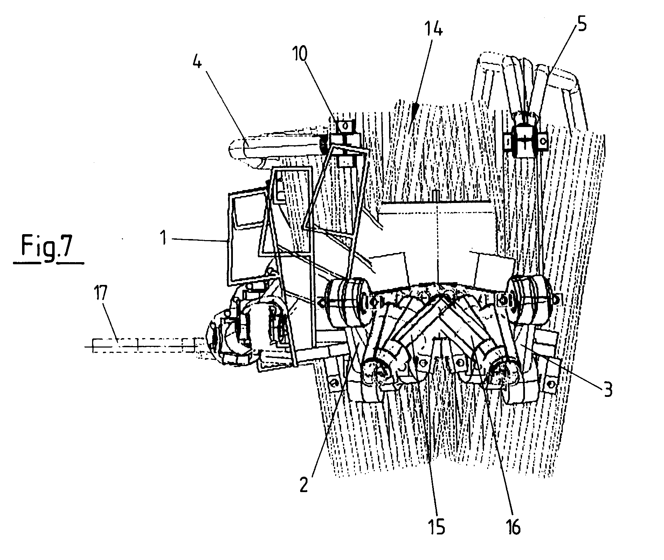

Bezug nehmend auf Fig. 7 ist ein Bewegungsablauf beim Sturzvorgang eines Zwillingsreifenpaketes 14 beschrieben.

Die Drehbewegung um einen unterhalb des Zwillingsreifenpaketes 12 liegenden Drehpunkt (nicht dargestellt) ist deutlich zu erkennen. In der Figur sind drei verschiedene Stellungen gezeigt: in der linken Stellung der maximal mögliche negative Sturz, in der mittleren Stellung die Neutralstellung, und in der rechten Stellung ist der maximal mögliche positive Sturz dargestellt. Die bereits beschriebenen Bauteile sind zur besseren Kenntlichmachung mit denselben Bezugszeichen versehen wie in den vorhergehenden Figuren, auch wenn sie an dieser Stelle nicht explizit erwähnt werden.

In dieser Darstellung sind auch sehr deutlich die bereits erwähnten Fixpunkte zu sehen, nämlich die Anlenkpunkte 6, 7 der unteren Lenker 2, 3 und die Anlenkpunkte 8, 9 der oberen Lenker 4, 5. Sehr gut sind auch die Bewegungen der Dämpfer 15, 16 zu erkennen.

### Bezugszeichen

- 1: Radträger
- 2: unterer Lenker
- 3: unterer Lenker
- 4: oberer Lenker
- 5: oberer Lenker
- 6: Anlenkpunkte der unteren Lenker
- 7: Annlenkpunkte der unteren Lenker
- 8: Anlenkpunkte der unteren Lenker
- 9: Anlenkpunkte der unteren Lenker
- 10: Anlenkpunkte der oberen Lenker
- 11: Anlenkpunkte der oberen Lenker
- 12: Luftfeder
- 13: Luftfeder
- 14: Zwillingsreifenpaket
- 15: Dämpfer
- 16: Dämpfer
- 17: Stabilisator
- 18: Zwischenlenker
- 19: Anlenkpunkte am Zwischenlenker
- 20: Anlenkpunkte am Zwischenlenker
- 21: Lenker
- 22: Lenker
- 23: Stelle am Lenker

## Patentansprüche

1. Radaufhängung für ein Fahrzeugrad (14), das von einem Radträger (1) getragen ist, der gegenüber einem Fahrzeugrahmen durch Führungs- und Federmittel höhenbeweglich geführt ist und die Radaufhängung je Achshälfte einen zusätzlichen Freiheitsgrad aufweist, der dem Radträger (1) eine Schwenkbewegung in einer Fahrzeugquerebene um eine in Fahrzeuglängsrichtung verlaufende Drehachse erlaubt, wobei diese Drehachse etwa in der Mitte des Fahrzeugrades (14) - bezogen auf seine Breite - verläuft, dadurch **gekennzeichnet,** daß diese Drehachse, bezogen auf ihre Höhe, unterhalb der Fahrbahnebene liegt, wobei die Radaufhängung zwei obere Lenker (4, 5) und zwei untere Lenker (2, 3) aufweist, wobei die Anlenkpunkte (8, 10 und 9, 11) der oberen Lenker (4, 5) so angeordnet sind, daß zwei Geraden durch die Anlenkpunkte (8 und 10) und durch die Anlenkpunkte (9 und 11) parallel zueinander sind und waagerecht verlaufen und die gedachte Verlängerung der unteren Lenker (2, 3) sich unter der Fahrbahnebene in einem Punkt auf der Drehachse der Schwenkbewegung schneiden.

2. Radaufhängung nach Anspruch 1, dadurch **gekennzeichnet,** daß der Radträger (1) aus Hohlprofilen besteht.

3. Radaufhängung nach Anspruch 1, dadurch **gekennzeichnet,** daß die oberen Lenker (4, 5) wesentlich länger als die unteren Lenker (2, 3) ausgeführt sind.

4. Radaufhängung nach Anspruch 3, dadurch **gekennzeichnet,** daß die oberen Lenker (4, 5) mindestens dreimal so lang sind wie die unteren Lenker (2, 3).

5. Radaufhängung nach Anspruch 1, dadurch **gekennzeichnet,** daß das Fahrzeugrad eine Zwillingsbereifung (14) oder einen Breitreifen aufweist.

6. Radaufhängung nach Anspruch 1, dadurch **gekennzeichnet,** daß die oberen Lenker (4, 5) über Molekulargelenke mit dem Fahrzeugrahmen verbunden sind.

7. Radaufhängung nach Anspruch 1, dadurch **gekennzeichnet,** daß die unteren Lenker (2, 3) in einem Winkel zur Fahrbahnebene im Raum stehen und sich ihre gedachten Verlängerungen in einem Bereich von 0 bis 100 mm vor dem Radaufstandpunkt und in einem Bereich von 50 bis 150 mm unter der Radaufstandsebene schneiden.

8. Radaufhängung nach Anspruch 1, dadurch **gekennzeichnet,** daß Dämpfer (15, 16) in Fahrtrichtung vor dem Fahrzeugrad (14) und zwischen den unteren Lenkern (2, 3) angeordnet sind.

9. Radaufhängung nach Anspruch 1, dadurch **gekennzeichnet,** daß ein Stabilisator (17) mit dem Radträger (1) über einen Zwischenlenker (18) verbunden ist.

10. Radaufhängung nach Anspruch 1, dadurch **gekennzeichnet,** daß ein Stabilisator unmittelbar am Radträger (1) befestigt ist.

11. Radaufhängung nach Anspruch 1, dadurch **gekennzeichnet,** daß die Mittellinie eines Zwischenlenkers (18) durch Anlenkpunkte (19, 20) die Momentandrehachse des Fahrzeugrades (14) in Konstruktionslage schneidet.

12. Radaufhängung nach Anspruch 1, dadurch **gekennzeichnet,** daß die Radaufhängung lenkbar ist.

13. Radaufhängung nach Anspruch 9 oder 10, dadurch **gekennzeichnet,** daß der Stabilisator (18) an wenigstens einer Stelle (23) in einer Richtung quer zur Fahrtrichtung ein Flächenträgheitsmoment aufweist, das wesentlich geringer ist als das Flächenträgheitsmoment in einer Richtung längs zur Fahrtrichtung.

## Claims

1. Wheel suspension for a vehicle wheel (14) supported by a wheel carrier (1) which, with reference to a vehicle chassis, is vertically movable by guiding and spring means, with the wheel suspension of each axle half showing an extra degree of freedom, allowing the wheel carrier (1) a swivel movement in a vehicle transversal plane around a pivoting axis oriented in vehicle longitudinal direction, with this pivoting axis running roughly along the center line of the vehicle wheel (14) - with reference to its width -, **characterized** in that this pivoting axis, with reference to its height, is located below the road surface l, with the wheel suspension featuring two upper links (4, 5) and two lower links (2, 3), with the pivoting points (8, 10 and 9, 11) of the upper links (4, 5) being arranged in a manner that two straight lines run parallel to each other and pass in horizontal direction through to the pivoting points (8 and 10) and through the pivoting points (9 and 11), and that the imaginary extension of the lower links (2, 3) intersects in a certain point the turning axis of the pivotal movement below the road surface.

2. Wheel suspension according to claim 1,
**characterized** in that the wheel carrier (1) is made of hollow sections.

3. Wheel suspension according to claim 1,
**characterized** in that the upper links (4, 5) are much longer than the lower links (2, 3).

4. Wheel suspension according to claim 3,
**characterized** in that the upper links (4, 5) are at least three times as long as the lower links (2, 3).

5. Wheel suspension according to claim 1,
**characterized** in that the vehicle wheel is provided with twin tires (14) or one wide-base tire.

6. Wheel suspension according to claim 1,
**characterized** in that the upper links (4, 5) are connected to the vehicle chassis by molecular joints.

7. Wheel suspension according to claim 1,
**characterized** in that the lower links (2, 3) are arranged at a particular angle to the road surface, with their imaginary exten-sions intersecting at a certain point within a range from 0 to 100 mm in front of the wheel contact and within a range from 50 to 150 mm below the wheel contact plane.

8. Wheel suspension according to claim 1,
**characterized** in that dampers (15, 16) are arranged in driving direction in front of the vehicle wheel (14) and between the lower links (2, 3).

9. Wheel suspension according to claim 1,
**characterized** in that a stabilizer (17) is connected with the wheel suspension (1) by an intermediate link (18).

10. Wheel suspension according to claim 1,
**characterized** in that a stabilizer is fixed directly to the wheel carrier (1).

11. Wheel suspension according to claim 1,
**characterized** in that an intermediate-link (18) center line through the pivoting points (19, 20) intersects the momentary rotation axis of the vehicle wheel (14) in design position.

12. Wheel suspension according to claim 1,
**characterized** in that the wheel suspension is maneuvrable.

13. Wheel suspension according to claims 9 or 10,
**characterized** in that the stabilizer (18) shows a plane inertia torque in at least in one position (23) transverse to the travelling direction, which is considerably lower than the plane inertia torque longitudinal to the travelling direction.

## Revendications

1. Suspension de roue pour une roue de véhicule (14) qui est portée par un support de roue (1) mobile verticalement par rapport à un châssis grâce à des moyens de guidage et des ressorts, la suspension de la roue présentant pour chaque moitié d'essieu un degré de liberté supplémentaire permettant au support de roue (1) d'effectuer, dans un plan transversal du véhicule, un mouvement pivotant autour d'un axe de rotation se développant dans le sens longitudinal du véhicule, cet axe de rotation se situant à peu près au centre de la roue du véhicule (14) par rapport à sa largeur, **caractérisée** en ce que cet axe de rotation, par rapport à sa hauteur, se situe en dessous du niveau de la chaussée, la suspension de la roue possédant deux bras supérieurs (4, 5) et deux bras inférieurs (2, 3), les points d'articulation (8, 10 et 9, 11) des bras supérieurs (4, 5) étant disposés de telle manière que deux droites passant par les points d'articulation (8 et 10) et par les points d'articulation (9 et 11) sont parallèles l'une par rapport à l'autre et se développent horizontalement, l'intersection de la prolongation virtuelle des bras inférieurs (2, 3) se trouvant en dessous du niveau de la chaussée en un point sur l'axe de rotation du mouvement pivotant.

2. Suspension de roue selon la revendication 1, **caractérisée** en ce que le support de roue (1) est fabriqué en profilés creux.

3. Suspension de roue selon la revendication 1, **caractérisée** en ce que les bras supérieurs (4, 5) sont nettement plus longs que les bras inférieurs (2, 3).

4. Suspension de roue selon la revendication 3, **caractérisée** en ce que les bras supérieurs (4, 5) sont au moins trois fois plus longs que les bras inférieurs (2, 3).

5. Suspension de roue selon la revendication 1, **caractérisée** en ce que la roue de véhicule est équipée de bandages jumelés (14) ou de pneus à bande large.

6. Suspension de roue selon la revendication 1, **caractérisée** en ce que les bras supérieurs (4, 5) sont reliés au châssis au moyen d'articulations moléculaires.

7. Suspension de roue selon la revendication 1, **caractérisée** en ce que les bras inférieurs (2, 3) se situent dans l'espace selon un angle par rapport à la chaussée, et en ce que l'intersection de leurs prolongations virtuelles se situe dans une plage de 0 à 100 mm avant le point de contact au sol de la roue et dans une plage de 50 à 150 mm en dessous du point de contact au sol de la roue.

8. Suspension de roue selon la revendication 1, **caractérisée** en ce que des amortisseurs (15, 16) sont disposés, dans le sens de la marche, devant la roue du véhicule (14) et entre les bras inférieurs (2, 3).

9. Suspension de roue selon la revendication 1, **caractérisée** en ce qu'une barre stabilisatrice (17) est reliée au support de roue (1) au moyen d'un bras intermédiaire (18).

10. Suspension de roue selon la revendication 1, **caractérisée** en ce qu'une barre stabilisatrice est directement fixée au support de roue (1).

11. Suspension de roue selon la revendication 1, **caractérisée** en ce que, dans la position de construction, la ligne centrale d'un bras intermédiaire (18) passant par les points d'articulation (19, 20) ) présente une intersection avec l'axe de lancement du couple de la roue de véhicule (14).

12. Suspension de roue selon la revendication 1, **caractérisée** en ce que la suspension de roue est dirigeable

13. Suspension de roue selon la revendication 9 ou 10, **caractérisée** en ce que la barre stabilisatrice (18) présente, à au moins un endroit (23) dans un sens transversal par rapport au sens de la marche, un moment d'inertie superficiel qui est nettement inférieur au moment d'inerte superficiel dans un sens longitudinal par rapport au sens de la marche.
